# EUROPÄISCHE PATENTSCHRIFT

(11) **EP 2 218 331 B1**
(45) Veröffentlichungstag und Bekanntmachung des Hinweises auf die Patenterteilung: **18.04.2018**
(21) Anmeldenummer: 10153426.1
(22) Anmeldetag: 12.02.2010
(51) Int. Cl.: A22C 5/00, B01F 7/00, A22C 11/08, B01F 5/06

(54) **Mischvorrichtung für Lebensmittel-Massen wie Wurstbrät sowie Füllmaschine**
Mixing device for food-masses such as sausage meat and filling machine
Appareil de mélange pour masses alimentaires telles que de la chair à saucisses ainsi que machine de bourrage

(30) Priorität: 13.02.2009 DE 202009002115 U
(43) Veröffentlichungstag der Anmeldung: 18.08.2010
(73) Patentinhaber: VEMAG Maschinenbau GmbH, 27283 Verden/Aller (DE)
(72) Erfinder: Kiel, Tobias, 27283 Verden (DE); Nilsson, Kersten, 27283 Verden (DE)
(74) Vertreter: Eisenführ Speiser

(56) Entgegenhaltungen:
- DE-A1- 1 900 567
- DE-A1- 10 111 001
- DE-A1-102005 059 052
- DE-T2- 69 801 921
- DE-U- 7 234 116
- US-A1- 2002 075 754

## Beschreibung

Die vorliegende Erfindung betrifft eine Mischvorrichtung nach dem Oberbegriff des Anspruchs 1 und eine Füllmaschine nach dem Oberbegriff des Anspruchs 12. Füllmaschinen der eingangs genannten Art dienen zum Abfüllen pastöser Lebensmittel-massen in Verpackungen. So können mit Hilfe solcher Füllmaschinen Fleischprodukte wie Brühwurst, Hackfleisch, Würstchen oder dgl. in Hüllen aus Natur- oder Kunstdarm abgefüllt werden. Eine Füllmaschine weist einen Fülltrichter zur Aufnahme der Masse, eine Förderpumpe und ein Füll-Rohr zum Abgeben der Masse auf. Der Füllmaschine nachgeschaltet sein können beispielsweise Clipper zum Abklemmen von Enden eines Wurstabschnitts, Füllstromteiler zum Aufteilen des Massenstroms in mehrere einzelne Massenströme oder andere sog. Vorsatzgeräte, die mit einer Füllmaschine gekoppelt werden können. Eine Füllmaschine kann auch mit einer nachgeschalteten Mischvorrichtung der eingangs genannten Art gekoppelt werden.

Mischvorrichtungen kommen beispielsweise bei der Abfüllung von Brühwurstmassen zum Einsatz. Bei der Abfüllung von Brühwurstmassen kann es zu einer Agglomeration von in der Masse vorhandener Luft, d. h. zu einer Bildung von größeren Luftblasen innerhalb der Masse, kommen, die unerwünscht sind und von Kunden nicht akzeptiert werden. Mithilfe einer der Füllmaschine nachgeschalteten Mischvorrichtung wird in der Masse enthaltene Luft fein verteilt. Im Stand der Technik kommen unterschiedliche Arten von Mischvorrichtungen zum Einsatz.

So kommen innerhalb eines rohrförmigen Gehäuses angeordnete Düsen mit einer Querschnittsverengung zum Einsatz. Durchströmt die Luft enthaltende Brühwurst-Masse die Düse, kommt es etwa aufgrund von Turbulenzen zu einer Zerkleinerung großer Luftblasen. Je nach Produktart wird ein spezieller Düsendurchmesser verwendet. Der Ein- bzw. Umbau und der damit verbundene Aufwand wird als nachteilig angesehen. Ferner können in der Lebensmittel-Masse enthaltene Einlagen, beispielsweise Pilzstücke in Wurstbrät aufgrund der Querschnittsverengung beschädigt oder zerstört werden.

Des Weiteren kommen innerhalb des Gehäuses der Mischvorrichtung angeordnete Labyrinthdüsen zum Einsatz, die eine Vielzahl von labyrinthartigen Umlenkelementen aufweisen, die die Masse mehrfach umlenken und dadurch eine Luftverteilung bewirken. Auch hierbei kann es zur Beschädigungen von Einschlüssen, beispielswiese Pilzen kommen. Ferner können längere in der Masse vorhandene Fasern, wie Sehnen oder dergleichen, an den Umlenkelementen, insbesondere den Kanten der Umlenkelemente hängen bleiben und sich dort ansammeln, was zu einer Verstopfung der Labyrinthdüsen führen kann.

Des Weiteren sind den Labyrinthdüsen ähnliche statische Mischer mit Trennelementen bekannt, die auch für eine Umlenkung der Strömung der Masse sorgen, aber auch den Nachteil aufweisen, dass Einlagen wie Pilze an den Trennflächen oder Kanten der Trennelemente beschädigt werden oder längliche Sehnen oder Fasern an den Kanten hängen bleiben und für Verstopfungen sorgen.

US 2002/0075754 offenbart einen kontinuierlichen Mischer, der zwei in einem Gehäuse angeordnete Förderschnecken aufweist. Die Förderschnecken weisen eine Anzahl an auswärts vorstehenden pyramidenförmigen Mischelementen auf, die in einem schraubenlinienförmigen Muster um die Schnecke herum angeordnet sind.

DE 10 2005 059 052 A1 offenbart eine Vakuumfüllmaschine zum Abfüllen pastöser Massen mit einem Förderwerk zum Fördern der Masse und einer Vakuumpumpe zum Erzeugen eines Unterdrucks in einem Vakuumbereich des Förderwerks. Das Förderwerk ist als Doppelschneckenförderwerk mit zwei Förderschnecken und einem Gehäuse ausgebildet.

Aus DE 72 34 116 U ist eine Vorrichtung zur Unterstützung der Entstehung von Turbulenzen in einem Rohr bekannt. Innerhalb des Rohres sind mehrere streifenförmige Elemente nebeneinander und hintereinander angeordnet, wobei die Elemente in ihrer Längsrichtung tordiert sind. Mit Hilfe der Vielzahl von Elementen soll eine starke Turbulenz in der durch das Rohr strömenden Flüssigkeit erzeugt werden.

Aufgabe der Erfindung ist es, eine Mischvorrichtung für fließfähige Lebensmittel-Massen, insbesondere Wurstbrät, Brühwurst oder andere Fleischprodukte bereitzustellen, bei denen es zu einer zuverlässigen, schonenden Durchmischung kommt. Insbesondere soll eine Mischvorrichtung bereitgestellt werden, mit der lufthaltige Brühwurst durchmischt oder Wurstbrät mit Einlagen schonend so durchmischt werden kann, dass auch empfindliche Einlagen wie Pilze nicht beschädigt werden. Ferner ist Aufgabe der Erfindung, eine Füllmaschine mit einer an diese gekoppelte Mischvorrichtung bereitzustellen.

Die Erfindung löst die Aufgabe mit einer Mischvorrichtung der eingangs genannten Art, bei der mindestens zwei innerhalb des Gehäuses statisch nebeneinander angeordnete schraubenförmige Mischelemente zum Mischen und/oder Bearbeiten von durch das Gehäuse fließender Masse vorhanden sind, wobei die schraubenförmig verlaufenden Windungen zweier benachbarter Mischelemente ineinander greifen (Anspruch 1).

Die Erfindung löst die Aufgabe ferner mit einer Füllmaschine der eingangs genannten Art, die mit einer erfindungsgemäßen Mischvorrichtung gekoppelt ist (Anspruch 12).

Durch die benachbarten schraubenförmigen Mischelemente wird die hindurch strömende Lebensmittel-Masse besonders schonend durchmischt. Zu diesem Zweck wird die Masse, insbesondere ein Wurstbrät, welches Einlagen enthalten kann, in das Gehäuse hinein gefördert und durchströmt dann die freien Strömungsquerschnitte zwischen den benachbart angeordneten schraubenförmigen Mischelementen. Die schraubenförmigen Mischelemente sind während des Betriebs grundsätzlich statisch angeordnet, d. h. sie drehen grundsätzlich nicht, sondern sind ortsfest fixiert innerhalb des Gehäuses. Aufgrund der schraubenförmigen Form der Windungen der Mischelemente kommt es zu vergleichsweise schonenden Umlenkungen der Strömung der Masse und zu Trennungen des Massenstroms entlang der schraubenförmigen freien Strömungsquerschnitte zur Durchmischung. Agglomerationen werden dadurch verringert und Gas feiner verteilt. Gleichzeitig werden auch empfindliche Einlagen in der Masse, wie Pilze, nicht beschädigt. Ansammlungen von längeren Partikeln wie Fasern oder Sehnen, werden gleichermaßen vermieden, da keine Kanten von Leitelementen vorhanden sind.

Eine besonders effektive Durchmischung ergibt sich dadurch, dass die schraubenförmig verlaufenden Windungen zweier benachbarter Mischelemente ineinander greifen.

Gemäß einer bevorzugten Ausführungsform wird vorgeschlagen, dass die Windung eines schraubenförmigen Mischelementes sich kontinuierlich ohne Unterbrechung im Wesentlichen über die gesamte axiale Länge des Gehäuses erstreckt. Dadurch ist sichergestellt, dass keine Kanten vorhanden sind, an denen sich Sehnen oder andere Partikel festsetzen könnten.

Ferner wird vorgeschlagen, dass sich eine Windung in radialer Richtung im Wesentlichen bis zum Kern eines benachbarten Mischelementes erstreckt, und die Längsachsen der schraubenförmigen Mischelemente im Wesentlichen parallel zueinander angeordnet sind. Hierdurch ist eine definierte Strömung gewährleistet, die sich teilweise nach außen bis zur Gehäusewandung und dann wieder nach innen bewegt, um dort zu einer erneuten Vermischung von Teilströmungen zu führen.

Eine alternative Ausführungsform zeichnet sich dadurch aus, dass drei oder mehr schraubenförmige Mischelemente parallel und benachbart zueinander innerhalb des Gehäuses angeordnet sind. Hierdurch wird insbesondere erreicht, dass größere Mengen verarbeitet werden können und/oder eine höhere Durchmischung erzielt wird, ohne dass die Baulänge der Vorrichtung vergrößert würde.

Die Mischungsströmung wird ferner vorteilhaft dadurch weitergebildet, dass die Windungen der Mischelemente mit ihrer äußeren Umfangsfläche in Kontakt mit dem Gehäuse stehen.

Gemäß einer alternativen Ausführungsform wird vorgeschlagen, dass mindestens eines der schraubenförmigen Mischelemente innerhalb des Gehäuses um eine Längsachse drehbar angeordnet ist und im Betrieb in mehreren Drehstellungen fixierbar ist. Durch eine Verdrehung eines schraubenförmigen Mischelementes kann der Abstand zweier benachbarter Windungen variiert und eingestellt werden. Dies kann einer Anpassung an spezifische Produkteigenschaften dienen. Im Betrieb wird das Mischelement nach der Einstellung fixiert, so dass es während der Durchströmung nicht verdreht, also statisch ist. Die Fixierung erfolgt vorteilhafterweise dadurch, dass das drehbare schraubenförmige Mischelement mittels eines Stiftes fixierbar ist, welcher mit einem Ende innerhalb einer Bohrung in dem Gehäuse angeordnet ist und mit einem Ende mit einer Bohrung in einer Windung des schraubenförmigen Mischelementes in Eingriff bringbar ist.

Eine alternative Ausführungsform zeichnet sich dadurch aus, dass das Gehäuse einen Umfangsabschnitt und zwei gegenüberliegende Anschlussplatten aufweist, die den Einlass bzw. Auslass aufweisen und/oder dass das Gehäuse mittels eines an einer Anschlussplatte angeordneten Rohrstutzens und einer Überwurfmutter an einer Füllmaschine befestigbar ist und/oder dass das Gehäuse mittels eines an einer Anschlussplatte angeordneten Rohrstutzens mit einem Vorsatzgerät koppelbar ist. Auf diese Weise lassen sich einfache Anschlussmöglichkeiten realisieren.

Eine alternative Ausführungsform sieht vor, dass die Steigung einer Windung im Bereich 12 bis 72 mm liegt und/oder dass die Dicke einer Windung im Bereich zwischen 4 und 20 mm und/oder dass jedes schraubenförmige Mischelement etwa 3 bis 10 Windungen aufweist.

Die obigen Vorteile werden gleichermaßen bei einer Kombination aus Füllmaschine und damit kooperierender, nachgeschalteter Mischvorrichtung erreicht (Anspruch 13). Es wird insoweit auf die obigen Beschreibungen Bezug genommen.

Die Erfindung ist nachstehend anhand eines Ausführungsbeispiels einer Füllmaschine und einer Mischvorrichtung näher erläutert, es zeigen:
- Figur 1: eine Füllmaschine mit daran angeschlossener Mischvorrichtung in einer Seitenansicht;
- Figur 2: eine erfindungsgemäße Mischvorrichtung in einer Schnittdarstellung;
- Figur 3: ein Teil der erfindungsgemäßen Mischvorrichtung aus Figur 2 in einer perspektivischen Darstellung; und
- Figur 4: die Mischvorrichtung in einer Schnittdarstellung in zwei Positionen 1 und 2, mit unterschiedlich zueinander eingestellten Schrauben.

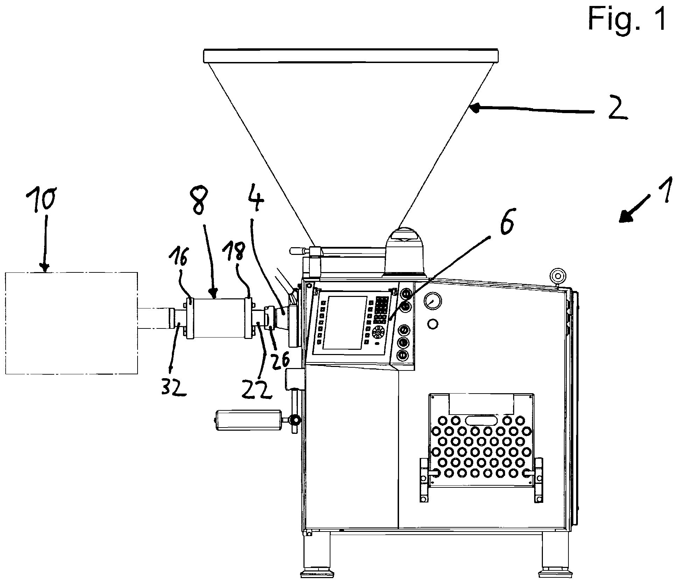

Die in Fig. 1 in einer Seitenansicht gezeigte Vorrichtung zum Fördern oder Abfüllen fließfähiger Massen, auch als Füllmaschine 1 bezeichnet, ist als Vakuum-Füllmaschine 1 ausgebildet und dient zum Fördern von Wurst-Brät. Sie weist unter anderem einen trichterförmigen Vorratsbehälter 2 zum Aufnehmen und Speichern des Bräts oder anderer pastöser Masse wie Teig auf. Eine nicht gezeigte Füllpumpe fördert die Masse in ein Füllrohr 4 oder Füllrohrhalter 4 zum Abgeben der Masse aus der Füllmaschine 1. Das Füllrohr 4 weist an seinem freien Ende ein Außengewinde auf. Mittels einer Steuerung und Bedienfeld 6 lässt sich die Füllmaschine 1 steuern.

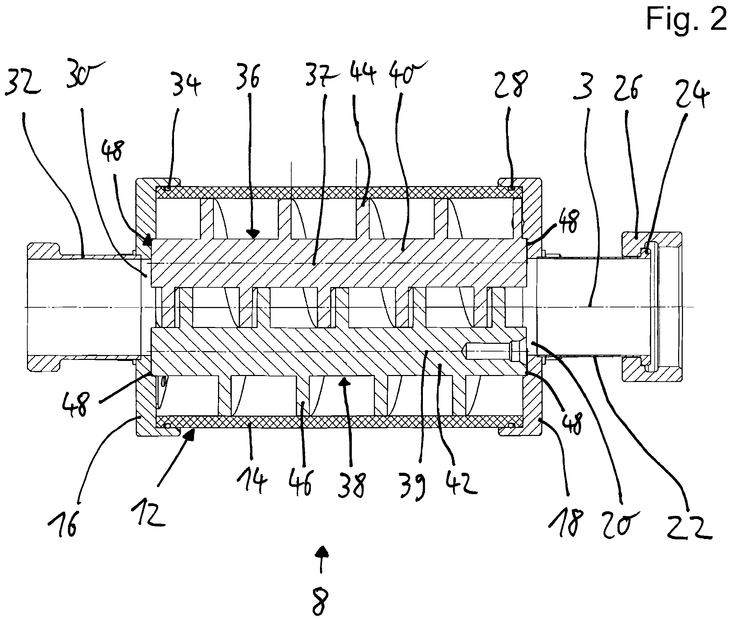

Eine Mischvorrichtung 8 zum Mischen und/oder Bearbeiten der fließfähigen Lebensmittel-Masse gemäß der Erfindung ist im Ausführungsbeispiel an die Füllmaschine 1 gekoppelt, sie könnte aber auch an eine andere Pumpe zum Fördern einer pastösen Lebensmittel-Masse gekoppelt sein oder mit einer Leitung, durch die pastöse Masse hindurch förderbar ist, verbunden sein. Die Mischvorrichtung 8, auch in den Fig. 2, 3 und 4 gezeigt, dient im Allgemeinen zum Bearbeiten von durch sie hindurch strömender Masse. Speziell im Ausführungsbeispiel dient sie zum feineren Verteilen von Gaseinschlüssen, insbesondere Lufteinschüssen innerhalb von Brühwurst mithilfe von schraubenförmigen Mischelementen, die unten näher beschrieben sind.

In Flussrichtung der Masse ist der Mischvorrichtung 8 ein so genanntes Vorsatzgerät 10 nachgeschaltet, bei dem es sich im Ausführungsbeispiel um einen Portionierer handelt. Es könnte auch alternativ als Füllstromteiler, Wolf oder so genannten Clipper zum Abteilen und Verschließen einzelner Wurstportionen oder dergleichen ausgebildet sein.

Die Mischvorrichtung 8 weist ein Gehäuse 12 auf, welches seinerseits einen Umfangsabschnitt 14 und zwei gegenüberliegende Anschlussplatten 16, 18 aufweist, die die offenen Enden des Umfangsabschnitts 14 seitlich verschließen. Die Anschlussplatte 18 weist mittig einen kreisförmigen Einlass 20 zum Einleiten von fließfähiger Masse in das Innere des Gehäuses 12 auf. Der Einlass 20 kommuniziert mit einem koaxial zu einer Längsachse 3 der Mischvorrichtung 8 angeordneten Rohrstutzen 22, welcher an seinem freien Ende einen vorstehenden Bund 24 aufweist. Mittels einer den Bund 24 hintergreifenden Überwurfmutter 26, lässt sich der Rohrstutzen 22 an das Füllrohr 4 der Füllmaschine 1 anschließen, so dass fließfähige Masse wie Wurstbrät aus der Füllmaschine 1 in das Innere der Mischvorrichtung 8 hinein und durch die Mischvorrichtung 8 hindurch förderbar ist. Die Anschlussplatte 18 übergreift den Umfangsabschnitt 14 und ist mittels einer Dichtung 28 zusätzlich abgedichtet. Mittels Schraubverbindung sind die Anschlussplatten 16, 18 mit dem Umfangsabschnitt 14 verschraubt.

Ein Auslass 30 zum Abgeben der Masse aus dem Inneren der Mischvorrichtung 8 ist als kreisförmige Öffnung mittig an der Anschlussplatte 16 ausgebildet. Ein Rohrstutzen 32 kommuniziert mit dem Auslass 30 und weist ein Bund oder Außengewinde auf, so dass die Mischvorrichtung 8 mittels einer Überwurfmutter oder mittels eines Gewindes mit einem weiteren Gerät, wie dem Vorsatzgerät 10, verbindbar ist. Die Anschlussplatte 16 ist ebenfalls mittels einer O-Ring-Dichtung 34 gegenüber dem Umfangsabschnitt 14 des Gehäuses abgedichtet.

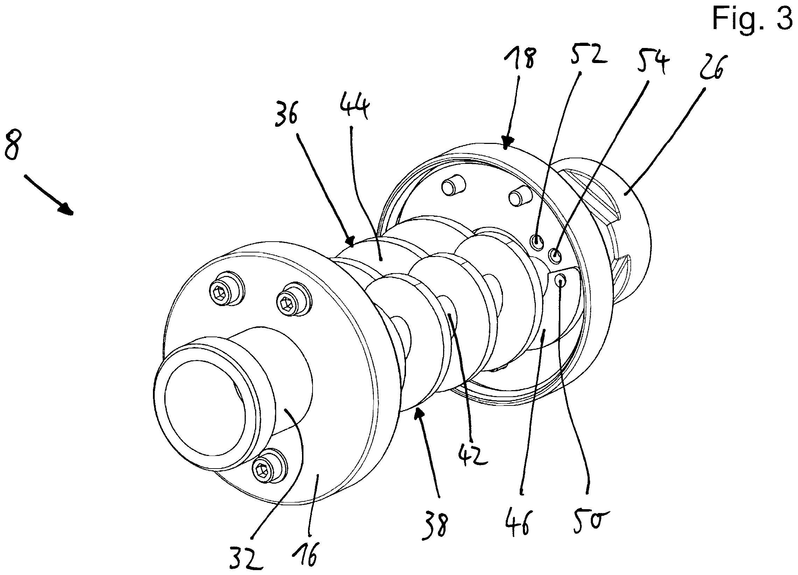

Wie die Figuren 2 und 3 veranschaulichen, sind zwei schraubenförmige Mischelemente 36, 38 zum Mischen und/oder Bearbeiten von Masse nebeneinander innerhalb des Gehäuses 12 der Mischvorrichtung 8 angeordnet. Die Längsachsen 37, 39 der Mischelemente 36, 38 sind parallel zueinander und parallel zu der Längsachse 3 angeordnet. Jedes Mischelement 36, 38 weist einen im Wesentlichen zylindrischen Kern 40, 42 und jeweils eine schraubenförmig verlaufende, im Wesentlichen radial von dem Kern 40, 42 abstehende Windung 44, 46 auf. Im Ausführungsbeispiel erstrecken sich die Windungen 44, 46 eines schraubenförmigen Mischelementes 36, 38 durchgehend, kontinuierlich ohne Unterbrechung im Wesentlichen über die gesamte axiale Länge des Gehäuses.

Dies ist jedoch nicht zwingend erforderlich. Die Windungen 44, 46 greifen dabei mit ihren inneren Abschnitten ineinander, und zwar im Ausführungsbeispiel so, dass die periphere Umfangsfläche einer Windung 44, 46 beinahe oder vollständig in Kontakt mit dem Kern 40, 42 des benachbarten Mischelementes 36, 38 steht. Ferner steht die periphere Umfangsfläche einer Windung 44, 46 abschnittsweise mit der inneren Oberfläche des Umfangsabschnitts 14 des Gehäuses 12 in Kontakt.

In nicht gezeigter Weise könnten auch mehr als zwei, beispielsweise drei, vier oder mehr schraubenförmige Mischelemente innerhalb des Gehäuses 12 angeordnet sein, vorzugsweise parallel und benachbart zueinander.

Die schraubenförmigen Mischelemente 36, 38 sind so angeordnet, dass freie Strömungsquerschnitte zwischen den Kernen 40, 42 und den Gehäuseabschnitten ausgebildet sind, die so geformt sind, dass durch den Einlass 20 eingeleitete Masse entlang dieser freien Strömungsquerschnitte, geleitet durch die Windungen 44, 46, durch das Innere der Mischvorrichtung 8 hindurch strömen kann, dabei umgelenkt und vermischt wird, um dann durch den Auslass 30 aus dem Inneren der Mischvorrichtung abgegeben werden zu können.

Im Ausführungsbeispiel beträgt die Steigung einer Windung etwa 48 mm. Die Dicke einer Windung liegt im Bereich von 8 mm. Jedes Mischelement weist etwa 4,5 Gänge auf. Jedoch sind diese Werte an die jeweiligen zu verarbeitenden fließfähigen Lebensmittel-massen je nach Bedarf anzupassen.

Die Mischelemente 36, 38 sind im Betrieb statisch, dass heißt unverdrehbar und ortsfest innerhalb des Gehäuses 12 positioniert. Hierzu sind an den Anschlussplatten 16, 18 an der Inneren Oberfläche im Wesentlichen zylindrische Ausnehmungen oder Vertiefungen 48 ausgebildet, in denen die zylindrischen Endabschnitte der Kerne 40, 42 der Mischelemente 36, 38 angeordnet sind. Eine zusätzliche lösbare Sicherung gegen ein Verdrehen ist durch unten näher beschriebene Stifte und Bohrungen näher realisiert.

Die perspektivische Darstellung gemäß Figur 3 zeigt die Mischvorrichtung 8 mit abgenommenen Umfangsabschnitt 14 des Gehäuses 12. Eine Sicherungseinrichtung gegen axiales Verdrehen dient folgendem Zweck: Mindestens ein schraubenförmiges Mischelement, im Ausführungsbeispiel das Mischelement 38, ist um eine Längsachse 39 drehbar angeordnet und mittels der Sicherungseinrichtung im Betrieb in mehreren Drehstellungen fixierbar. Hierzu ist in der Windung 46 im Bereich eines seiner Enden eine Bohrung 50 ausgebildet, in welche ein nicht gezeigter zylindrischer Stift einführbar ist. Ferner sind in der Anschlussplatte 18 des Gehäuses 12 zwei Bohrungen 52, 54 ausgebildet, in welche wahlweise je nach Drehstellung des verdrehbaren Mischelementes 38 der Stift einsetzbar ist, je nachdem ob die Bohrung 50 mit der Bohrung 52 oder 54 fluchtet.

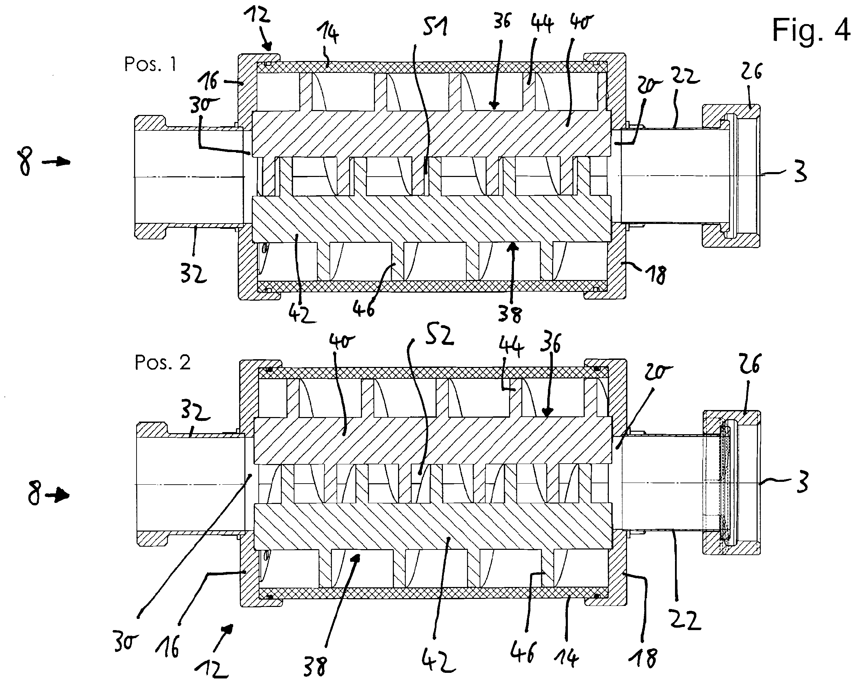

Die Figur 4 zeigt zwei unterschiedliche Drehstellungen des verdrehbaren Mischelementes 38 in Position 1 und Position 2. Die Unterschiede der Position 1 zu Position 2 gemäß Figur 4 zeigen, dass die Abstände der Windungen 44, 46 der Mischelemente 36, 38 je nach Drehstellung der beiden Mischelemente 36, 38 relativ zueinander unterschiedlich gross sind, wie man sehr gut im inneren Bereich, wo die Windungen 44, 46 ineinander greifen, erkennen kann. Wie man Figur 4 entnimmt, ist ein schmaler Spalt S₁ in Position 1 realisiert, während ein vergrößerter, breiterer Spalt S₂ in Position 2 erkennbar ist.

Dadurch lassen sich die freien Strömungsquerschnitte für die fließfähige Masse je nach Eigenschaften der Masse variieren. So kann es beispielsweise in Abhängigkeit von der Viskosität der Masse oder davon, ob empfindliche Einlagen wie Pilze oder dergleichen in einem Wurstbrät oder einer anderen Masse vorhanden sind oder nicht, wünschenswert sein, die freien Strömungsquerschnitte zu variieren. Diese Anpassung kann insbesondere wünschenswert sein, um unterschiedliche Mischergebnisse zu erreichen. Beispielsweise kann es wünschenswert sein, die freien Strömungsquerschnitte in ihrer Größe variieren zu können, um Gaseinschlüsse, wie Luftblasen oder dergleichen besonders gut fein verteilen zu können oder die Einlagen während der Durchströmung zu schonen.

Statt einer Einstellung und Fixierung mithilfe der Bohrungen 50, 52, 54 und einem Stift wären auch andere Dreh- und Sicherungsmechanismen möglich. So könnte beispielsweise zur Verdrehung eines der Mischelemente 36, 38 ein motorischer Antrieb realisiert sein.

## Patentansprüche

1. Mischvorrichtung für fließfähige Lebensmittel-Massen, insbesondere Wurstbrät, mit einem Gehäuse (12), welches einen Einlass (20) zum Einleiten der Masse und einen Auslass (30) zum Abgeben der Masse aufweist, sowie mit mindestens zwei innerhalb des Gehäuses statisch nebeneinander angeordneten schraubenförmigen Mischelementen (36, 38) zum Mischen und/oder Bearbeiten von durch das Gehäuse fließender Masse, wobei die schraubenförmig verlaufenden Windungen (44, 46) zweier benachbarter Mischelemente (36, 38) ineinander greifen.

2. Mischvorrichtung nach Anspruch 1,
**dadurch gekennzeichnet, dass** die Windung (44, 46) eines schraubenförmigen Mischelementes (36, 38) sich kontinuierlich ohne Unterbrechung im Wesentlichen über die gesamte axiale Länge des Gehäuses (12) erstreckt.

3. Mischvorrichtung nach Anspruch 1 oder 2,
**dadurch gekennzeichnet, dass** sich eine Windung (44, 46) in radialer Richtung im Wesentlichen bis zum Kern (40, 42) eines benachbarten Mischelementes (36, 38) erstreckt und
die Längsachsen (37, 39) der schraubenförmigen Mischelemente (36, 38) im Wesentlichen parallel zueinander angeordnet sind.

4. Mischvorrichtung nach einem der vorstehenden Ansprüche,
**dadurch gekennzeichnet, dass** drei oder mehr schraubenförmige Mischelemente parallel und benachbart zueinander innerhalb des Gehäuses (12) angeordnet sind.

5. Mischvorrichtung nach einem der vorstehenden Ansprüche,
**dadurch gekennzeichnet, dass** die Windungen (44, 46) der Mischelemente (36, 38) mit ihrer äußeren Umfangsfläche in Kontakt mit dem Gehäuse (12) stehen.

6. Mischvorrichtung nach einem der vorstehenden Ansprüche,
**dadurch gekennzeichnet, dass** mindestens eines der schraubenförmigen Mischelemente (36, 38) innerhalb des Gehäuses (12) um eine Längsachse (37, 39) drehbar angeordnet ist und im Betrieb in mehreren Drehstellungen fixierbar ist.

7. Mischvorrichtung nach Anspruch 6,
**dadurch gekennzeichnet, dass** das drehbare schraubenförmige Mischelement (38) mittels eines Stiftes fixierbar ist, welcher mit einem ersten Ende innerhalb einer Bohrung (52, 54) in dem Gehäuse (12) angeordnet ist und mit einem zweiten Ende mit einer Bohrung (50) in einer Windung (46) des schraubenförmigen Mischelementes (38) in Eingriff bringbar ist.

8. Mischvorrichtung nach einem der vorstehenden Ansprüche,
**dadurch gekennzeichnet, dass** das Gehäuse (12) einen Umfangsabschnitt (14) und zwei gegenüberliegende Anschlussplatten (16, 18) aufweist, die den Einlass (20) bzw. Auslass (30) aufweisen.

9. Mischvorrichtung nach Anspruch 8,
**dadurch gekennzeichnet, dass** das Gehäuse (12) mittels eines an einer Anschlussplatte (18) angeordneten Rohrstutzens (22) und einer Überwurfmutter (26) an einer Füllmaschine (1) befestigbar ist.

10. Mischvorrichtung nach Anspruch 8 oder 9,
**dadurch gekennzeichnet, dass** das Gehäuse (12) mittels eines an einer Anschlussplatte (16) angeordneten Rohrstutzens (32) mit einem Vorsatzgerät (10) koppelbar ist

11. Mischvorrichtung nach einem der vorstehenden Ansprüche,
**dadurch gekennzeichnet, dass** die Steigung einer Windung (44, 46) im Bereich von 12 bis 72 mm liegt und/oder dass die Dicke einer Windung (44, 46) im Bereich zwischen 4 und 20 mm und/oder dass jedes schraubenförmige Mischelement (36, 38) etwa 3 bis 10 Windungen (44, 46) aufweist.

12. Füllmaschine zum Fördern und/oder Abfüllen fließfähiger Lebensmittel-Massen, insbesondere Wurstbrät, mit einem vorzugsweise trichterförmigen Vorratsbehälter (2) zum Aufnehmen der Masse, einer Füllpumpe zum Fördern der Masse und einem mit der Füllpumpe kommunizierenden Füllrohr (4) zum Abgeben der abzufüllenden Masse, **gekennzeichnet durch** eine mit dem Füllrohr (4) kommunizierende Mischvorrichtung (8) mit einem Gehäuse, welches einen Einlass zum Einleiten der Masse und einen Auslass (30) zum Abgeben der Masse aufweist,
und durch mindestens zwei innerhalb des Gehäuses statisch nebeneinander angeordnete schraubenförmige Mischelemente zum Mischen und/oder Bearbeiten von durch das Gehäuse fließender Masse gemäß mindestens einem der vorstehenden Ansprüche 1 bis 11.

## Claims

1. A mixing device for foodstuff materials capable of flow, in particular sausage meat, comprising a housing (12) having an inlet (20) for introduction of the material and an outlet (30) for discharge of the material, and
at least two helical mixing elements (36, 38) arranged statically in mutually juxtaposed relationship within the housing for mixing and/or processing material flowing through the housing, wherein the helically extending turns (44, 46) of two adjacent mixing elements (36, 38) engage into each other.

2. A mixing device as set forth in claim 1 **characterised in that** the turn (44, 46) of a helical mixing element (36, 38) extends continuously without interruption substantially over the entire axial length of the housing (12).

3. A mixing device as set forth in claim 1 or claim 2 **characterised in that** a turn (44, 46) extends in the radial direction substantially to the core (40, 42) of an adjacent mixing element (36, 38), and the longitudinal axes (37, 39) of the helical mixing elements (36, 38) are arranged in substantially mutually parallel relationship.

4. A mixing device as set forth in one of the preceding claims **characterised in that** three or more helical mixing elements are arranged in mutually parallel and adjacent relationship within the housing (12).

5. A mixing device as set forth in one of the preceding claims **characterised in that** the turns (44, 46) of the mixing elements (36, 38) are in contact with the housing (12) with their outer peripheral surface.

6. A mixing device as set forth in one of the preceding claims **characterised in that** at least one of the helical mixing elements (36, 38) is arranged rotatably about a longitudinal axis (37, 39) within the housing (12) and in operation is fixable in a plurality of rotational positions.

7. A mixing device as set forth in claim 7 **characterised in that** the rotatable helical mixing element (38) is fixable by means of a pin which is arranged with a first end within a bore (52, 54) in the housing (12) and can be brought into engagement with a second end with a bore (50) in a turn (46) of the helical mixing element (38).

8. A mixing device as set forth in one of the preceding claims **characterised in that** the housing (12) has a peripheral portion (14) and two oppositely disposed connecting plates (16, 18) which have the inlet (20) and the outlet (30) respectively.

9. A mixing device as set forth in claim 9 **characterised in that** the housing (12) can be secured to a filling machine (1) by means of a tube connection (22) arranged at a connecting plate (18) and a union nut (26).

10. A mixing device as set forth in claim 9 or claim 10 **characterised in that** the housing (12) can be coupled to an accessory device (10) by means of a tube connection (32) arranged at a connecting plate (16).

11. A mixing device as set forth in one of the preceding claims **characterised in that** the pitch of a turn (44, 46) is in the region of between 12 and 72 mm and/or that the thickness of a turn (44, 46) is in the region of between 4 and 20 mm and/or that each helical mixing element (36, 38) has between about 3 and 10 turns (44, 46).

12. A filling machine for conveying and/or filling foodstuff materials which are capable of flow, in particular sausage meat, comprising a preferably hopper-shaped supply container (2) for receiving the material, a filling pump for conveying the material and a filling tube (4) communicating with the filling pump for discharge of the material to be filled,
**characterised by** a mixing device (8) communicating with the filling tube (4) and comprising a housing having an inlet for introduction of the material and an outlet (30) for discharge of the material, and
at least two helical mixing elements arranged statically in mutually juxtaposed relationship within the housing for mixing and/or processing material flowing through the housing as set forth in at least one of the preceding claims 1 to 11.

## Revendications

1. Dispositif de mélange pour des masses alimentaires pouvant s'écouler, en particulier pour de la chair à saucisse, comprenant un boîtier (12), qui présente une entrée (20) servant à introduire la masse et une sortie (30) servant à distribuer la masse,
ainsi que comprenant au moins deux éléments de mélange (36, 38) de forme hélicoïdale disposés les uns à côté des autres de manière statique à l'intérieur du boîtier, servant à mélanger et/ou à travailler une masse s'écoulant à travers le boîtier, dans lequel les spires (44, 46) s'étendant de manière à présenter une forme hélicoïdale de deux éléments de mélange (36, 38) adjacents s'imbriquent les unes dans les autres.

2. Dispositif de mélange selon la revendication 1,
**caractérisé en ce que** la spire (44, 46) d'un élément de mélange (36, 38) de forme hélicoïdale s'étend en continu sans interruption sensiblement sur toute la longueur axiale du boîtier (12) .

3. Dispositif de mélange selon la revendication 1 ou 2,
**caractérisé en ce qu'**une spire (44, 46) s'étend dans la direction radiale sensiblement jusqu'à la partie centrale (40, 42) d'un élément de mélange (36, 38) adjacent, et
les axes longitudinaux (37, 39) des éléments de mélange (36, 38) de forme hélicoïdale sont disposés sensiblement de manière parallèle les uns par rapport aux autres.

4. Dispositif de mélange selon l'une quelconque des revendications précédentes,
**caractérisé en ce que** trois éléments de mélange de forme hélicoïdale ou plus sont disposés de manière parallèle et de manière adjacente les uns par rapport aux autres à l'intérieur du boîtier (12).

5. Dispositif de mélange selon l'une quelconque des revendications précédentes,
**caractérisé en ce que** les spires (44, 46) des éléments de mélange (36, 38) sont en contact avec le boîtier (12) par leur surface périphérique extérieure.

6. Dispositif de mélange selon l'une quelconque des revendications précédentes,
**caractérisé en ce qu'**au moins un des éléments de mélange (36, 38) de forme hélicoïdale est disposé de manière à pouvoir tourner autour d'un axe longitudinal (37, 39) à l'intérieur du boîtier (12) et peut être bloqué en fonctionnement dans plusieurs positions de rotation.

7. Dispositif de mélange selon la revendication 6,
**caractérisé en ce que** l'élément de mélange (38) de forme hélicoïdale pouvant tourner peut être bloqué au moyen d'une tige, qui est disposée par une première extrémité à l'intérieur d'un alésage (52, 54) dans le boîtier (12) et qui peut être amenée en prise par une seconde extrémité avec un alésage (50) dans une spire (46) de l'élément de mélange (38) de forme hélicoïdale.

8. Dispositif de mélange selon l'une quelconque des revendications précédentes,
**caractérisé en ce que** le boîtier (12) présente une section périphérique (14) et deux plaques de raccordement (16, 18) opposées, qui présentent l'entrée (20) ou la sortie (30) .

9. Dispositif de mélange selon la revendication 8,
**caractérisé en ce que** le boîtier (12) peut être fixé au niveau d'une machine de remplissage (1) au moyen d'une tubulure (22) disposée au niveau d'une plaque de raccordement (18) et au moyen d'un écrou-raccord (26).

10. Dispositif de mélange selon la revendication 8 ou 9,
**caractérisé en ce que** le boîtier (12) peut être couplé à un appareil adaptateur (10) au moyen d'une tubulure (32) disposée au niveau d'une plaque de raccordement (16).

11. Dispositif de mélange selon l'une quelconque des revendications précédentes,
**caractérisé en ce que** le pas d'une spire (44, 46) se situe dans la plage allant de 12 à 72 mm, et/ou que l'épaisseur d'une spire (44, 46) se situe dans la plage comprise entre 4 et 20 mm, et/ou que chaque élément de mélange (36, 38) de forme hélicoïdale présente environ 3 à 10 spires (44, 46).

12. Machine de remplissage servant à transporter et/ou à transvaser des masses alimentaires pouvant s'écouler, en particulier de la chair à saucisse, comprenant un réservoir (2) de préférence en forme d'entonnoir servant à recevoir la masse, une pompe de remplissage servant à transporter la masse et un tuyau de remplissage (4) communiquant avec la pompe de remplissage servant à distribuer la masse à transvaser, **caractérisée par** un dispositif de mélange (8) communiquant avec le tuyau de remplissage (4), comprenant un boîtier qui présente une entrée servant à introduire la masse et une sortie (30) servant à distribuer la masse
et par au moins deux éléments de mélange de forme hélicoïdale disposés les uns à côté des autres de manière statique à l'intérieur du boîtier servant à mélanger et/ou à travailler de la masse s'écoulant à travers le boîtier selon au moins l'une quelconque des revendications 1 à 11.
